# EUROPÄISCHE PATENTSCHRIFT

(11) **EP 4 164 367 B1**
(45) Veröffentlichungstag und Bekanntmachung des Hinweises auf die Patenterteilung: **04.12.2024**
(21) Anmeldenummer: 21728213.6
(22) Anmeldetag: 25.05.2021
(51) Int. Cl.: A01B 63/22, A01B 73/02, A01B 73/04, A01B 39/18

(54) **BODENBEARBEITUNGSGERÄT FÜR REIHENKULTUREN**
TILLAGE EQUIPMENT FOR ROW CROPS
ÉQUIPEMENT DE TRAVAIL DU SOL POUR LES CULTURES EN LIGNE

(30) Priorität: 11.06.2020 DE 202020103368 U
(43) Veröffentlichungstag der Anmeldung: 19.04.2023
(73) Patentinhaber: Amazonen-Werke H. Dreyer SE & Co. KG, 49205 Hasbergen (DE)
(72) Erfinder: DIETRICH, Robert, 04651 Flößbeg (DE); MAHLER, Tom, 04249 Leipzig (DE); SCHWOPE, Reinhard, 06258 Schkopau / OT Wallendorf (DE); RESCH, Rainer, 49170 Hagen am Teutoburger Wald (DE)
(86) Internationale Anmeldenummer: PCT/EP2021/063793
(87) Internationale Veröffentlichungsnummer: WO 2021/249753

(56) Entgegenhaltungen:
- EP-A1- 0 966 874
- EP-A2- 1 616 471
- DE-A1- 102017 116 633
- FR-A1- 3 083 664
- US-A1- 2005 039 932

## Beschreibung

Die Erfindung betrifft ein Bodenbearbeitungsgerät für Reihenkulturen gemäß dem Oberbegriff des Anspruchs 1.

Ein derartiges Bodenbearbeitungsgerät ist in DE 10 2015 016 884 B4 und in EP 1 616 471 A2 beschrieben. Das Bodenbearbeitungsgerät ist zur Bearbeitung, insbesondere Unkrautbeseitigung, für Reihenkulturen vorgesehen und umfasst einen Rahmen, der sich in Arbeitsstellung quer zur Fahrtrichtung erstreckt. Zur Bearbeitung größerer Arbeitsbreiten weisen derartige Rahmen regelmäßig ein Basissegment und an beiden freien Enden des Basissegments jeweils einen zu dem Basissegment klappbaren Ausleger auf. Das Basissegment bildet somit das Mittelstück des Rahmens und dient daher in der Regel auch der Anordnung einer Ankuppelvorrichtung, um das Bodenbearbeitungsgerät an ein Zugfahrzeug anzubauen.

Um das Bodenbearbeitungsgerät in eine weniger ausladende Transportstellung, insbesondere zum Transport über öffentliche Straßen, zu falten, ist bei klappbarer Rahmenbauart eine Klappvorrichtung vorgesehen zur Verbringung der klappbaren Ausleger zwischen der Arbeitsstellung und der zumindest annährend, vorzugsweise mindestens, um 90 Grad, insbesondere aufrecht, geklappten Transportstellung. An dem Rahmen, also dem Basissegment und den Auslegern, ist hierbei eine Mehrzahl von Werkzeugträgern über jeweils eine Höhenführungseinrichtung angeordnet. Die Höhenführungseinrichtung kann bei diesem Bodenbearbeitungsgerät als Parallelogramm ausgeführt sein und einen fernverstellbaren Aktor aufweisen, so dass der zugeordnete Werkzeugträger gegenüber dem Rahmen fernverstellbar abgesenkt und angehoben werden kann.

An den Werkzeugträgern sind einzelnen Pflanzenreihen zugeordnete Bodenbearbeitungswerkzeuge angeordnet. Die Bodenbearbeitungswerkzeuge dienen der Bestandspflege der Reihe von Nutzpflanzen, der sie zugeordnet sind und können beispielsweise als Fingerrad, Hackschar, Meißel, Striegel o.Ä. ausgeführt sein. In der Arbeitsstellung wird der Rahmen üblicherweise von dem Zugfahrzeug in einstellbarer Höhe über der Fläche getragen, von wo aus die Bodenbearbeitungswerkzeuge über die mit Höhenführungseinrichtungen zusammenwirkenden Werkzeugträger auf den Boden abgesenkt werden. Um die Bodenbearbeitungswerkzeuge einer Pflanzenreihe zuzuordnen, sind die Werkzeugträger üblicherweise äquidistant zueinander am Rahmen angeordnet. Der Abstand mit dem die Werkzeugträger am Rahmen angeordnet sind kann hierbei dem Reihenabstand der Pflanzenreihen auf der zu pflegenden Fläche entsprechen.

Durch die Anpassung der Anordnung der Werkzeugträger am Rahmen an die zu bearbeitenden Pflanzenreihen kann es insbesondere bei besonders schmalen Reihenabständen zu Problemen bei der Verbringung der Ausleger in die Transportstellung kommen. Zur Einnahme der Transportstellung ist es bisher üblich sämtliche Werkzeugträger mittels der Höhenführungseinrichtungen in ihre angehobene Position zu verbringen, um zusätzliche Bodenfreiheit zu generieren, so dass die Höhenführungseinrichtungen zumindest teilweise in vertikaler Richtung bis über den Rahmen aufragen. In dem Bereich, wo die Ausleger an dem Basissegment angeordnet sind kann dies allerdings zur Kollision führen, da an dem Ausleger angeordnete Werkzeugträger über an dem Basissegment angeordnete Werkzeugträger geklappt werden insbesondere bei Klappung um zumindest 90 Grad.

Der Erfindung liegt daher die Aufgabe zugrunde, ein Bodenbearbeitungsgerät zu schaffen, welches zuverlässig zwischen Arbeitsstellung und Transportstellung verbringbar ist, insbesondere bei Anordnung der Werkzeugträger in geringem Abstand zueinander. Vorzugsweise soll ermöglicht werden Werkzeugträger unmittelbar im Übergangsbereich zwischen Basissegment und Ausleger anzuordnen, ohne die zuverlässige Verbringung zwischen Arbeits- und Transportstellung zu beeinträchtigen.

Diese Aufgabe wird erfindungsgemäß dadurch gelöst, dass die Klappvorrichtung und zumindest die Höhenführungseinrichtungen an dem Basissegment angeordneter Werkzeugträger durch eine, vorzugsweise hydraulische, Kopplungssteuereinrichtung miteinander gekoppelt sind derart, dass bei jedem Verbringen eines Auslegers aus der Arbeitsstellung in die Transportstellung die Höhenführungseinrichtungen an dem Basissegment angeordneter Werkzeugträger die Werkzeugträger in eine gegenüber dem Rahmen abgesenkte Position verbringen.

Die Erfindung macht sich die Erkenntnis zunutze, dass durch automatisches Absenken an dem Basissegment angeordneter Werkzeugträger eine Kollision zuverlässig vermieden werden kann, da der kritische Bauraum im Übergangsbereich zwischen Basissegment und Ausleger für zur Einnahme der Transportstellung überklappende, an einem Ausleger angeordnete Werkzeugträger freigegeben wird. Das Bodenbearbeitungsgerät kann durch die Ausleger eine Arbeitsbreite von bis zu 6 Metern und mehr erreichen. An einem Werkzeugträger können Bodenbearbeitungswerkzeuge zur Bearbeitung einer einzigen Pflanzenreihe angeordnet sein, wobei der Werkzeugträger vorzugsweise senkrecht oberhalb der zu bearbeitenden Pflanzenreihe am Rahmen angeordnet ist. Vorzugsweise kann ein Werkzeugträger Bodenbearbeitungswerkzeuge zur Bearbeitung zweier benachbarter Pflanzenreihen tragen, wobei der Werkzeugträger in Arbeitsstellung vorzugsweise oberhalb, zwischen den zu bearbeitenden Pflanzenreihen am Rahmen angeordnet ist. Die Klappvorrichtung umfasst einen Klappaktor pro Ausleger, der vorzugsweise als Hydraulikzylinder ausgebildet ist. Die Höhenführungseinrichtung kann zumindest einen Parallelogrammlenker umfassen und weist einen Verstellaktor auf, der vorzugsweise hydraulisch oder pneumatisch bzw. elektrisch fernverstellbar ist. Die Kopplungssteuereinrichtung ist vorzugsweise hydraulisch ausgebildet.

Das Verbringen des Bodenbearbeitungsgerätes aus der Arbeitsstellung in die Transportstellung erfolgt mittels der Kopplungssteuereinrichtung nach einem vorgegebenen Bewegungsablauf: Der zumindest eine Ausleger beginnt mittels der Klappvorrichtung zu Klappen, wodurch die Höhenführungseinrichtungen an dem Basissegment angeordneter Werkzeugträger veranlasst werden die jeweiligen Werkzeugträger abzusenken, so dass der Bauraum für die überklappenden Werkzeugträger des zumindest einen Ausleger freigegeben wird. Die Höhenführungseinrichtungen des Bodenbearbeitungsgerätes können gruppenweise oder vorzugsweise einzeln ansteuerbar sein. Die Bodenbearbeitungswerkzeuge sind somit über die Werkzeugträger vorzugsweise einzeln aushebbar, das heißt in eine angehobene Position ohne Bodenkontakt verbringbar.

Die Werkzeugträger befinden sich in Arbeitsstellung des Bodenbearbeitungsgerätes üblicherweise in einer Zwischenposition aus der sie der Bodenkontur in vertikaler Richtung folgen können. Während an dem zumindest einen Ausleger angeordnete Werkzeugträger zur Einnahme der Transportstellung mittels ihrer Höhenführungseinrichtungen vorzugsweise in eine angehobene Position verbracht und dort gehalten werden, werden die an dem Basissegment angeordneten Werkzeugträger zunächst mit angehoben und anschließend wieder in die Arbeitsposition, falls diese der maximal abgesenkten Position entspricht, zurückverbracht oder weiter abgesenkt, so dass sie in abgesenkte Position gegenüber dem Rahmen geraten. Die Höhenführungseinrichtungen befinden sich in der abgesenkten Position unterhalb einer Ebene, die durch die Längsrichtung des Rahmens, also des Basissegments und/oder des zumindest einen Auslegers, und die Fahrtrichtung aufgespannt wird und somit in Arbeitsstellung des Bodenbearbeitungsgerätes zumindest annährend horizontal verläuft. Die Ebene wird durch die Einnahme der Transportstellung in mehrere Teilebenen aufgeteilt, nämlich eine Teilebene pro Rahmenelement: Aufgespannt werden die Teilebenen durch die Längsrichtung des Basissegments oder Auslegers und die Fahrtrichtung, so dass die Teilebene eines in Transportstellung befindlichen Auslegers zumindest annährend vertikal ausgerichtet ist.

In einer bevorzugten Ausführungsform des erfindungsgemäßen Bodenbearbeitungsgerätes sind die Höhenführungseinrichtungen an einem Ausleger angeordneter Werkzeugträger derart mit der Kopplungssteuereinrichtung gekoppelt, dass bei jedem Verbringen eines Auslegers aus der Arbeitsstellung in die Transportstellung die Höhenführungseinrichtungen an einem Ausleger angeordneter Werkzeugträger die Werkzeugträger in eine angehobene Position verbringen. Die Werkzeugträger befinden sich in der Arbeitsstellung üblicherweise in einer Zwischenposition, so dass sie der Bodenkontur folgen können. Gegenüber der Arbeitsposition werden die Werkzeugträger an den Auslegern also angehoben. Die Höhenführungseinrichtungen an dem zumindest einen Ausleger angeordneter Werkzeugträger befinden sich im Vergleich zur Arbeitsstellung in der angehobenen Position im Wesentlichen oberhalb einer Ebene, die durch die Längsrichtung des Auslegers und die Fahrtrichtung aufgespannt wird. "Oberhalb" bezieht sich hierbei weniger auf die Schwerkraftrichtung als viel mehr, dass die Höhenführungseinrichtungen aus der, insbesondere abgesenkten, Zwischenposition in die angehobene Position von der Ausgangsposition auf einer Seite der Ebene durch die Ebene hindurch auf die andere Seite der Ebene verbracht werden. Infolge dieser Ausführungsform weist das Bodenbearbeitungsgerät in der geklappten Transportstellung eine verringerte Querausladung auf.

Ferner ist ein erfindungsgemäßes Bodenbearbeitungsgerät bevorzugt, das zumindest ein Stützrad, das über eine fernverstellbare Schwenkeinrichtung, vorzugsweise auf der den Werkzeugträgern abgewandten Seite, an dem Rahmen, insbesondere einem Ausleger, angeordnet ist, umfasst. Vorzugsweise kann das Bodenbearbeitungsgerät zumindest ein Stützrad pro Ausleger umfassen. Ferner ist denkbar, dass zumindest ein Stützrad an dem Basissegment angeordnet ist. Das zumindest eine Stützrad rollt in der Arbeitsstellung des Bodenbearbeitungsgerätes auf dem Boden ab und führt den Rahmen so in einstellbarer Höhe. Das zumindest eine Stützrad ist mittels der Schwenkeinrichtung gegenüber dem Rahmen in der Höhe verschwenkbar.

In einer besonders bevorzugten Ausführungsform des erfindungsgemäßen Bodenbearbeitungsgerätes ist vorgesehen, dass die zumindest eine Schwenkeinrichtung mit der Kopplungssteuereinrichtung gekoppelt ist derart, dass bei jedem Verbringen eines Auslegers aus der Arbeitsstellung in die Transportstellung die Schwenkeinrichtung das zumindest eine Stützrad in eine Aushubposition verschwenkt. In Arbeitsstellung des Bodenbearbeitungsgerätes ist das zumindest eine Stützrad mittels der Schwenkeinrichtung in einstellbaren Abstand gegenüber dem Rahmen abgesenkt, so dass es auf dem Boden abrollt. Zur Einnahme der Transportstellung wird das zumindest eine Stützrad in eine Hubstellung verschwenkt, die den Bodenkontakt aufhebt, so dass das Stützrad ausgehoben ist. In der Aushubposition befindet sich das zumindest eine Stützrad zumindest teilweise in einer Ebene, die durch die Längsrichtung des Rahmens und die Fahrtrichtung aufgespannt wird. Vorteilhaft ist hierbei, dass die Querausladung des Bodenbearbeitungsgerätes in Transportstellung reduziert ist.

In einer weiteren vorteilhaften Weiterbildung des erfindungsgemäßen Bodenbearbeitungsgerätes sind die Höhenführungseinrichtungen jeweils dazu eingerichtet, den Werkzeugträger in zumindest 30 Zentimeter, vorzugsweise zumindest 40 Zentimeter, beabstandete Positionen zu verbringen. Die beabstandeten Positionen können der abgesenkten Position und der angehobenen Position zugeordnet sein. Das Bodenbearbeitungsgerät ist somit dazu eingerichtet, die Bodenbearbeitungswerkzeuge zumindest 30 Zentimeter, vorzugsweise zumindest 40 Zentimeter, über Bodenniveau auszuheben, so dass den zu pflegenden Kulturpflanzen beispielweise bei Wendevorgängen ausreichend Freigang gewährt werden kann.

Die Höhenführungseinrichtungen können jeweils dazu eingerichtet sein, den Umfang eines an dem Werkzeugträger befestigten Führungsrades auf einen Abstand unter einer Ebene, die durch die Längsrichtung des Rahmens, also des Basissegments und/oder des Auslegers, und die Fahrtrichtung aufgespannt ist, abzusenken, der zumindest dem zweifachen Durchmesser des Führungsrades entspricht und/oder den Umfang des Führungsrades zumindest annährend in diese Ebene anzuheben.

Das erfindungsgemäße Bodenbearbeitungsgerät ist ferner vorteilhaft dadurch weitergebildet, dass die Höhenführungseinrichtungen eine lösbare Befestigungsvorrichtung, die vorzugsweise als Klemmvorrichtung ausgebildet ist, zur Anordnung der Werkzeugträger am Rahmen aufweist, so dass die Werkzeugträger in verstellbaren Abständen quer zur Fahrtrichtung am Rahmen anordbar sind. Vorzugsweise ist der Rahmen, also das Basissegment und der zumindest eine Ausleger, als H-Profil ausgebildet, so dass dieser Befestigungsflächen zur formschlüssigen Anordnung der Befestigungsvorrichtung aufweist. Ein Werkzeugträger lässt sich mittels der lösbaren Befestigungsvorrichtung ebenfalls in einfach Weise demontieren, so dass die Anzahl an dem Rahmen angeordneter Werkzeugträger variiert werden kann. Die Werkzeugträger können mittels der Befestigungsvorrichtungen besonders zweckmäßig der Reihenweite der zu pflegenden Pflanzenreihen angepasst werden. Vorzugsweise bearbeiten die Bodenbearbeitungswerkzeuge zweier nebeneinander am Rahmen angeordneter Werkzeugträger hierzu gemeinsam eine Pflanzenreihe.

In einer weiteren bevorzugten Ausführungsform des erfindungsgemäßen Bodenbearbeitungsgerätes sind zumindest die die Höhenführungseinrichtungen an einem Ausleger angeordneter Werkzeugträger, vorzugsweise in geklappter Transportstellung des Bodenbearbeitungsgerätes, verriegelbar. Eine geeignete Verriegelungsvorrichtung kann hydraulisch oder mechanisch ausgebildet sein.

In einer anderen bevorzugten Ausführungsform des erfindungsgemäßen Bodenbearbeitungsgerätes ist vorgesehen, dass die Kopplungssteuereinrichtung als hydraulische Masterschaltung ausgebildet ist, so dass bei jedem Verbringen eines Auslegers aus der Arbeitsstellung in die Transportstellung die Höhenführungseinrichtungen an dem Basissegment angeordneter Werkzeugträger ausschließlich in Richtung der abgesenkten Position, die Höhenführungseinrichtungen an einem Ausleger angeordneter Werkzeugträger ausschließlich in Richtung der angehobenen Position und/oder die Schwenkeinrichtung ausschließlich in Richtung der Aushubposition ansteuerbar ist. Mittels der als Masterschaltung ausgebildeten Kopplungssteuereinrichtung ist so ein gefahrloses und kollisionsfreies Einklappen gewährleistet. Die Kopplungssteuereinrichtung kann zumindest ein Sensorelement umfassen, welches dazu eingerichtet ist, die Einnahme der abgesenkten Position an dem Basissegment angeordneter Werkzeugträger und/oder der Transportstellung der Ausleger zu überwachen. Vorzugsweise sind die Höhenführungseinrichtungen an dem Basissegment angeordneter Werkzeugträger anhand der Daten des Sensorelements mittels der Kopplungssteuereinrichtung steuerbar, so dass in Transportstellung verhindert wird, dass diese Höhenführungseinrichtungen in eine angehobene Position verbracht werden.

In einer weiteren bevorzugten Ausführungsform des erfindungsgemäßen Bodenbearbeitungsgerätes weist der Rahmen das Basissegment und zwei Ausleger auf, wobei die Ausleger um jeweils eine liegende Achse klappbar, in Fahrtrichtung vor dem Basissegment angeordnet sind.

In einer Weiterbildung der vorbeschriebenen Ausführungsform des erfindungsgemäßen Bodenbearbeitungsgerätes sind das Basissegment und die Ausleger angrenzend an die liegenden Achsen, insbesondere quer zur Fahrtrichtung, überlagernd angeordnet.

Um ein Bodenbearbeitungsgerät, das nach einer der vorstehenden Ausführungsformen ausgebildet sein kann, mit einem Rahmen, der sich in Arbeitsstellung quer zur Fahrrichtung erstreckt und ein Basissegment und zwei zu dem Basissegment klappbare Ausleger aufweist, aus der Arbeitsstellung in eine Transportstellung, in die die Ausleger um zumindest annährend 90 Grad aufrecht mittels jeweils eines Klappaktors geklappt werden, zu verbringen, wobei an dem Rahmen eine Mehrzahl von Werkzeugträgern angeordnet sind, deren Position gegenüber dem Rahmen von jeweils einer Höhenführungseinrichtung gesteuert wird, ist vorgesehen, dass die an dem Basissegment angeordneten Werkzeugträger in eine gegenüber dem Rahmen abgesenkte Position verfahren werden sobald die Klappaktoren beginnen die Ausleger aus der Arbeitsstellung in die Transportstellung zu klappen.

In vorteilhafter Weiterbildung der Verbringung des Bodenbearbeitungsgerätes aus der Arbeitsstellung in die Transportstellung kann vorgesehen sein, dass an den Auslegern angeordnete Stützräder und Werkzeugträger gegenüber dem Rahmen angehoben werden sobald die Klappaktoren beginnen die Ausleger einzuklappen.

Weitere Einzelheiten der Erfindung sind der Beispielsbeschreibung und den Zeichnungen zu entnehmen. Die Zeichnungen zeigen
- Fig.1: ein erfindungsgemäßes Bodenbearbeitungsgerät in Arbeitsstellung in perspektivischer Ansicht,
- Fig.2: das Bodenbearbeitungsgerät in Transportstellung in perspektivischer Ansicht,
- Fig.3: das Bodenbearbeitungsgerät gemäß Fig.2 in Ansicht von hinten, und
- Fig.4: das Bodenbearbeitungsgerät gemäß Fig.2 in Draufsicht.

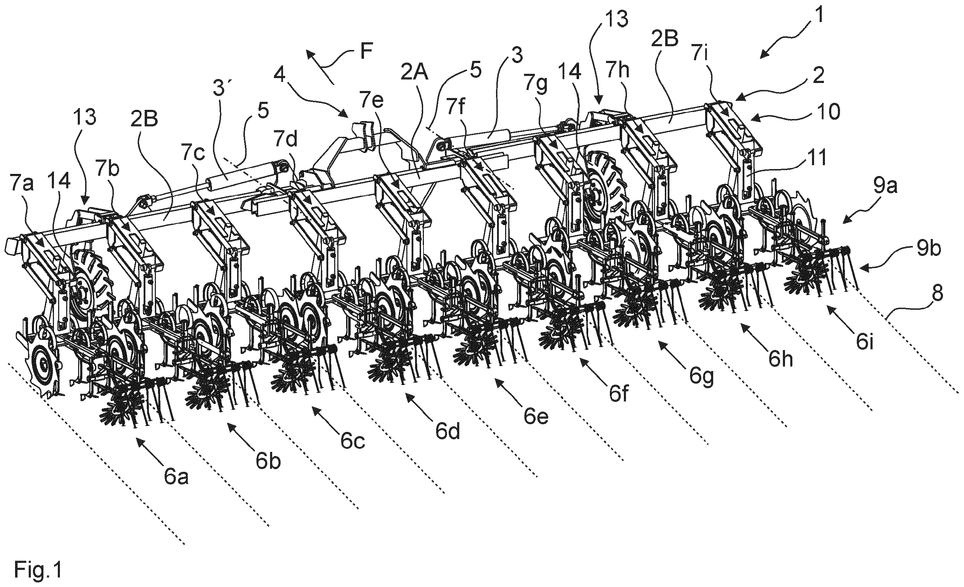

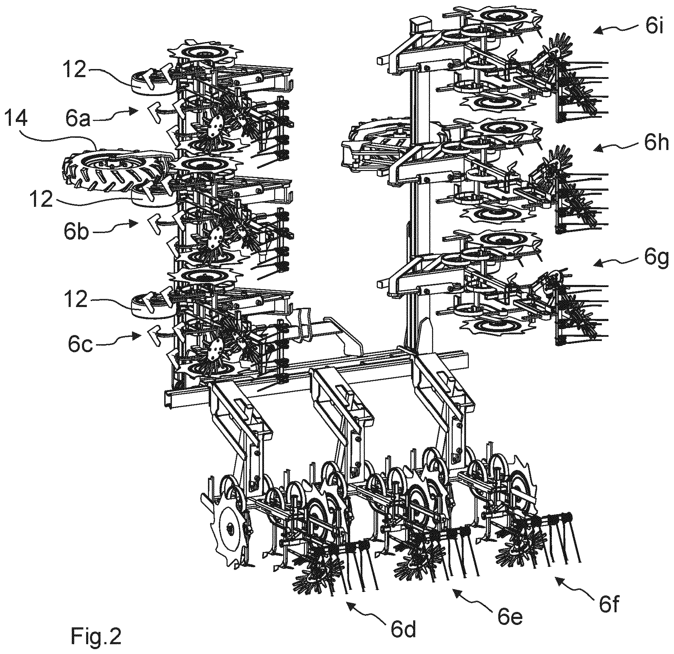

Ein als Hackmaschine ausgebildetes Bodenbearbeitungsgerät 1 für Reihenkulturen ist in Fig.1 in Arbeitsstellung zu sehen. Das Bodenbearbeitungsgerät 1 umfasst einen Rahmen 2, der ein zentrales Basissegment 2A und zwei zu dem Basissegment 2A klappbare Ausleger 2B aufweist und sich in der gezeigten Arbeitsstellung quer zur Fahrtrichtung F erstreckt. Das Basissegment 2A dient unter anderem der Anordnung einer Anbauvorrichtung 4 mittels derer das Bodenbearbeitungsgerät 1 mit einem nicht dargestellten Zugfahrzeug gekoppelt werden kann. Die beiden Ausleger 2B schließen quer zur Fahrtrichtung F an die freien Enden des Basissegments 2A an und sind in Fahrtrichtung F vor dem Basissegment 2A angeordnet. Mittels einer Klappvorrichtung 3, welche zwei als Hydraulikzylinder 3' ausgebildete Klappaktoren aufweist, sind die Ausleger 2B aus der zumindest annährend horizontalen Arbeitsstellung in eine zumindest annährend um 90 Grad geklappte, aufrechte Transportstellung verbringbar, wie in Fig.2 gezeigt. Hierzu werden aus der Arbeitsstellung, wie in Fig.1 gezeigt, die Hydraulikzylinder 3' betätigt, so dass ihre Kolbenstangen eingefahren werden, wodurch die Ausleger 2B um jeweils eine liegende Achse 5 in die Transportstellung geklappt werden. Das Basissegment 2A und die Ausleger 2B sind im Bereich der liegenden Achsen 5 quer zur Fahrtrichtung F überlagernd angeordnet.

Das Bodenbearbeitungsgerät 1 umfasst ferner eine Mehrzahl quer zur Fahrtrichtung F am Rahmen 2 angeordneter Werkzeugträger 6a - 6i. Die Werkzeugträger 6a - 6i sind jeweils über eine fernverstellbare Höhenführungseinrichtung 7a - 7i an dem Basissegment 2A oder einem der Ausleger 2B angeordnet und tragen einzelnen Pflanzenreihen 8 zugeordnete Bodenbearbeitungswerkzeuge 9a sowie als Striegel 9b ausgebildete Bodenbearbeitungswerkzeuge. Die Höhenführungseinrichtungen 7a - 7i umfassen bei diesem Bodenbearbeitungsgerät 1 eine Parallelogrammaufhängung 10, welche durch jeweils einen, in diesem Fall als Hydraulikzylinder ausgeführten, Aktor 11 in einstellbarer Weise verformbar und somit fernverstellbar ist. Durch die gezielte Deformation einer Parallelogrammaufhängung 10 mittels des Aktors 11 kann der zugeordnete Werkzeugträger 6a - 6i in einstellbarer Höhe gegenüber dem Rahmen 2 getragen werden.

Zur Anordnung der Werkzeugträger 6a - 6i am Rahmen 2 weisen die Höhenführungseinrichtungen 7a - 7i an ihrem vorderen freien Ende eine als Klemmvorrichtung ausgebildete, lösbare Befestigungsvorrichtung auf. Die Werkzeugträger 6a - 6i lassen sich so in den Reihenabständen der Pflanzenreihen 8 angepassten Abständen an dem Basissegment 2A und den Auslegern 2B befestigen. Der Rahmen 2 kann als H-Profil ausgeführt sein, wobei die Klemmvorrichtung zwei, das H-Profil umgreifende und gegeneinander verspannbare Befestigungsklauen aufweist.

Die Bodenbearbeitungswerkzeuge 9a, welche einzelnen Pflanzenreihen 8 zugeordnet sind, sind bei diesem Bodenbearbeitungsgerät 1 in Fahrtrichtung F als Hackschutzrollen, Hackmesser und Fingerräder ausgebildet und werden durch die nachlaufenden Striegel 9b ergänzt. Die Werkzeugträger 6a - 6i sind quer zur Fahrtrichtung F jeweils zwischen zwei zu bearbeitenden Pflanzenreihen 8 am Rahmen 2 angeordnet, so dass an benachbarten Werkzeugträgern 6a - 6i angeordnete Hackschutzrollen und Fingerräder gemeinsam eine Pflanzenreihe 8 bearbeiten und die Hackmesser und Striegel 9b zwischen zwei benachbarten Pflanzenreihen 8 geführt werden. Die Werkzeugträger 6a - 6i tragen ferner ein vorlaufendes Führungsrad 12 über dessen Abstand zum Werkzeugträger 6a - 6i die Arbeitstiefe der Bodenbearbeitungswerkzeuge 9a, 9b einstellbar ist. Der Abstand zwischen Führungsrad 12 und Werkzeugträger 6a - 6i kann von Hand beispielsweise mittels einer Kurbel einstellbar sein oder fernverstellbar beispielsweise hydraulisch betätigbar sein.

Das Bodenbearbeitungsgerät 1 umfasst ferner zwei über jeweils eine fernverstellbare Schwenkeinrichtung 13 auf der den Werkzeugträgern 6a - 6i abgewandten Seite des Rahmens 2 angeordnete Stützräder 14. Die Stützräder 14 sind bei diesem Bodenbearbeitungsgerät 1 an den Auslegern 2B angeordnet und rollen in Arbeitsstellung des Bodenbearbeitungsgerätes 1 auf dem zu bearbeitenden Boden ab, so dass der Rahmen 2 sich darauf abstützt. Mittels der Schwenkeinrichtungen 13 sind die Stützräder 14 in eine Aushubposition herauf schwenkbar, welche den Bodenkontakt aufhebt und in den Fig.2 - 4 gezeigt ist.

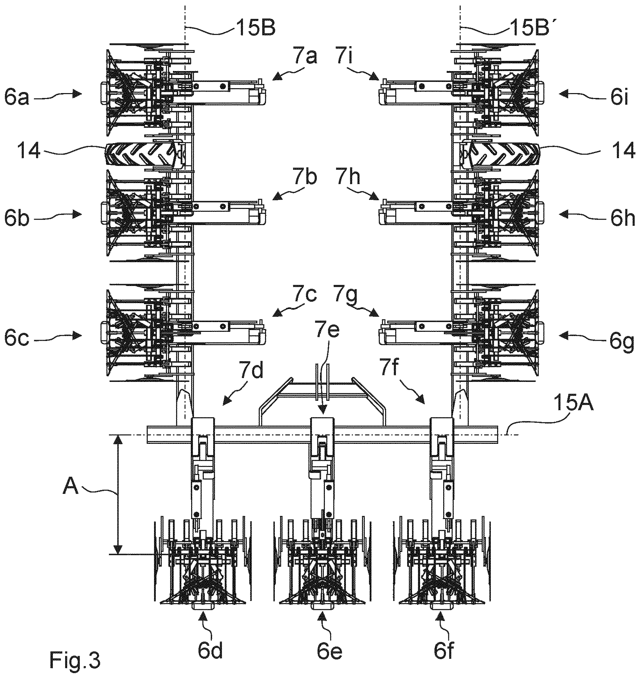

In der in Fig.1 gezeigten Arbeitsstellung des Bodenbearbeitungsgerätes 1 befinden sich sämtliche Werkzeugträger 6a - 6i in einer Zwischenposition, in der das jeweilige Führungsrad 12 auf dem Boden abrollt und die Aktoren 11 von den Höhenführungseinrichtungen 7a - 7i entkoppelt sind, so dass die Werkzeugträger 6a - 6i bzw. die daran befestigen Bodenbearbeitungswerkzeuge 9a, 9b mittels des mit der Parallelogrammaufhängung 10 zusammenwirkenden Führungsrades 12 der Bodenkontur folgen können. Um das Bodenbearbeitungsgerät 1 in die in den Fig.2, 3 und 4 gezeigte Transportstellung zu verbringen, ist die Klappvorrichtung 3 vorgesehen. Hierbei ist zu beachten, dass an den Auslegern 2B angeordnete Werkzeugträger 6a - 6c, 6g - 6i über die an dem Basissegment 2A angeordneten Werkzeugträger 6d - 6f klappen. Um Kollisionen zwischen den Höhenführungseinrichtungen 7a - 7i an den Auslegern 2B und an dem Basissegment 2A angeordneter Werkzeugträger 6a - 6i zu vermeiden, ist eine Kopplungssteuereinrichtung vorgesehen: Die Klappvorrichtung 3 und die Höhenführungseinrichtungen 7d - 7f an dem Basissegment 2A angeordneter Werkzeugträger 6d - 6f sind mittels der Kopplungssteuereinrichtung derart miteinander gekoppelt, dass bei jedem Verbringen der Ausleger 2B aus der Arbeitsstellung in die Transportstellung die Höhenführungseinrichtungen 7d - 7f an dem Basissegment 2A angeordneter Werkzeugträger 6d - 6f die Werkzeugträger 6d - 6f in eine gegenüber dem Rahmen 2 abgesenkte Position verbringen. In der abgesenkten Position sind die Aktoren 11 der Höhenführungseinrichtungen 7d - 7f vorzugsweise komplett eingefahren, so dass die Parallelogrammaufhängungen 10 sich vom Basissegment 2A nach unten strecken und so insbesondere im Bereich oberhalb der liegenden Achsen 5 den Bauraum für die überklappenden Teile des Bodenbearbeitungsgerätes freigeben, wie Fig.3 zeigt.

Die Höhenführungseinrichtungen 7a - 7i befinden sich in der abgesenkten Position im Wesentlichen unterhalb einer Ebene 15A, 15B, 15B`, die durch die Längsrichtung des Rahmens 2, also des Basissegments 2A und/oder der Ausleger 2B, und die Fahrtrichtung F aufgespannt wird und somit in Arbeitsstellung des Bodenbearbeitungsgerätes 1 zumindest annährend horizontal verläuft. Die Ebene 15A, 15B, 15B` wird durch die Einnahme der Transportstellung in mehrere Teilebenen 15A, 15B, 15B` aufgeteilt, nämlich eine Teilebene 15A, 15B, 15B' pro Rahmenelement 2A, 2B: Aufgespannt werden die Teilebenen 15A, 15B, 15B' durch die Längsrichtung des Basissegments 2A oder Auslegers 2B und die Fahrtrichtung F, so dass die Teilebene 15B, 15B' eines in Transportstellung befindlichen Auslegers 2B zumindest annährend vertikal ausgerichtet ist.

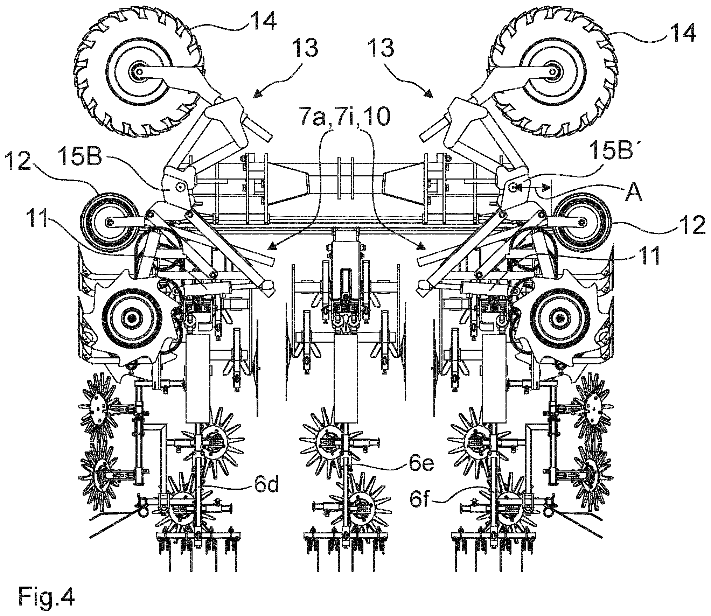

Die Höhenführungseinrichtungen 7a - 7c, 7g - 7i an einem Ausleger 2B angeordneter Werkzeugträger 6a - 6c, 6g - 6i sind ebenfalls mit der Kopplungssteuereinrichtung gekoppelt derart, dass bei jedem Verbringen eines Auslegers 2B aus der Arbeitsstellung in die Transportstellung die Höhenführungseinrichtungen 7a - 7c, 7g - 7i an einem Ausleger 2B angeordneter Werkzeugträger 6a - 6c, 6g - 6i die Werkzeugträger 6a - 6c, 6g - 6i in eine angehobene Position verbringen. In der angehobenen Position sind die Aktoren 11 der Höhenführungseinrichtungen 7a - 7c, 7g - 7i vorzugsweise komplett ausgefahren, so dass die Parallelogrammaufhängungen 10 sich von den Auslegern 2B nach oben strecken und so den, insbesondere im Bereich der liegenden Achsen 5, freigegebenen Bauraum in der Transportstellung einnehmen. Die Höhenführungseinrichtungen 7a - 7c, 7g - 7i befinden sich in der angehobenen Position im Wesentlichen oberhalb der Ebene 15A, 15B, 15B`, die durch die Ausleger 2B und die Fahrtrichtung F aufgespannt wird, wie Fig.3 und 4 zeigen. In Transportstellung befinden sich die Höhenführungseinrichtungen 7a - 7c, 7g - 7i somit zwischen den Teilebenen 15B, 15B', wie Fig.3 zeigt. "Oberhalb" bezieht sich somit weniger auf die Schwerkraftrichtung als viel mehr, darauf dass die Höhenführungseinrichtungen 7a - 7c, 7g - 7i aus der abgesenkten Position in die angehobene Position, also von der Ausgangsposition auf einer Seite der Ebene 15B, 15B' durch die Ebene 15B, 15B' hindurch auf die andere Seite der Ebene 15B, 15B' verbracht werden. Das Bodenbearbeitungsgerät 1 weist in der geklappten Transportstellung somit eine verringerte Querausladung auf, wobei die Höhenführungseinrichtungen 7a - 7c, 7g - 7i an den Auslegern 2B angeordneter Werkzeugträger 6a - 6c, 6g - 6i in der Transportstellung verriegelbar sind. Ein ungewolltes Verschwenken dieser Werkzeugträger 6a - 6c, 6g - 6i könnte beispielsweise andere Verkehrsteilnehmer gefährden und wird so effektiv vermieden.

Die Werkzeugträger 6a - 6i befinden sich in der Arbeitsstellung des Bodenbearbeitungsgerätes 1 zumindest annährend in der abgesenkten Position. Um bei Fahrten in eine Keilsituation oder bei Wendevorgängen auf der zu pflegenden Fläche die Nutzpflanzen zu schonen, können die Bodenbearbeitungswerkzeuge 9a, 9b über die mit den jeweiligen Werkzeugträgern 6a - 6i zusammenwirkenden Höhenführungseinrichtungen 7a - 7i pro Werkzeugträger 6a - 6i ausgehoben werden. Hierzu wird der jeweilige Werkzeugträger 6a - 6i in seine angehobene Position verbracht. Um den Nutzpflanzen mit zunehmendem Wachstum weiterhin ausreichend Freigang zu gewähren, kann die abgesenkte und die angehobene Position ein Abstand von zumindest 40 Zentimetern aufweisen. Die Höhenführungseinrichtungen 7a - 7i sind somit jeweils dazu eingerichtet, den Werkzeugträger 6a - 6i in zumindest 40 Zentimeter beabstandete Positionen zu verbringen. Durch Zusammenschau von Fig.3 und 4 ist zu sehen, dass die Höhenführungseinrichtungen 7a - 7i jeweils dazu eingerichtet sind, den Umfang des Führungsrades 12 auf einen Abstand A unter der Ebene 15A, 15B, 15B' abzusenken, der zwischen dem einfachen und dem zweifachen Durchmesser des Führungsrades 12 liegt und/oder den Umfang des Führungsrades 12 zumindest annährend in diese Ebene 15A, 15B, 15B' anzuheben.

Die Schwenkeinrichtungen 13, über welche die Stützräder 14 in verschwenkbarer Weise an den Auslegern 2B angeordnet sind, sind ebenfalls mit der Kopplungssteuereinrichtung gekoppelt derart, dass bei jedem Verbringen eines Auslegers 2B aus der Arbeitsstellung in die Transportstellung die Schwenkeinrichtung 13 das jeweilige Stützrad 14 in eine Aushubposition verschwenkt. Die Stützräder 14 befinden sich in der Aushubposition zumindest teilweise in der Ebene 15B, 15B`, so dass das Bodenbearbeitungsgerät 1 in der Transportstellung eine weiter verringerte Querausladung aufweist, wie Fig.4 zeigt.

Die Kopplungssteuereinrichtung ist bei diesem Bodenbearbeitungsgerät 1 als hydraulische Masterschaltung ausgebildet, so dass bei jedem Verbringen eines Auslegers 2B aus der Arbeitsstellung in die Transportstellung die Höhenführungseinrichtungen 7d - 7f an dem Basissegment 2A angeordneter Werkzeugträger 6d - 6f ausschließlich in Richtung der abgesenkten Position, die Höhenführungseinrichtungen 7a - 7c, 7g - 7i an den Auslegern 2B angeordneter Werkzeugträger 6a - 6c, 6g - 6i ausschließlich in Richtung der angehobenen Position und die Schwenkeinrichtungen 13 ausschließlich in Richtung der Aushubposition ansteuerbar sind. Die Hydraulikzylinder 3' der Klappvorrichtung 3, die als Hydraulikzylinder ausgeführten Aktoren 11 der Höhenführungseinrichtungen 7a - 7i, sowie die ebenfalls einen hydraulischen Aktor aufweisenden Schwenkeinrichtungen 13 sind mittels der hydraulischen Masterschaltung derart verschaltet, dass das Verbringen des Bodenbearbeitungsgerätes 1 einem vorgegebenen Bewegungsablauf folgt. Das Bodenbearbeitungsgerät 1 ist somit besonders einfach, sicher und zweckmäßig aus der Arbeitsstellung in die Transportstellung zu verbringen, wobei Fehlbedienungen bzw. Kollisionen vermieden werden. Hierbei werden die folgenden Schritte ausgeführt:
- Klappen der Ausleger 2B aus der sich quer zur Fahrtrichtung F erstreckenden Arbeitsstellung, wie in Fig.1 gezeigt, in die um zumindest annährend 90 Grad angewinkelte Transportstellung mittels der Klappvorrichtung 3,
- Absenken an dem Basissegment 2A angeordneter Werkzeugträger 6d - 6f mittels der jeweiligen Höhenführungseinrichtungen 7d - 7f,
- Anheben an den Auslegern 2B angeordneter Werkzeugträger 6a - 6c, 6g - 6i mittels der jeweiligen Höhenführungseinrichtungen 7a - 7c, 7g - 7i, und/oder
- Ausheben der Stützräder 14 mittels der Schwenkeinrichtungen 13.

### Bezugszeichenliste

- 1: Bodenbearbeitungsgerät
- 2: Rahmen
- 2A: Basissegment
- 2B: Ausleger
- F: Fahrtrichtung
- 3: Klappvorrichtung
- 3`: Hydraulikzylinder
- 4: Anbauvorrichtung
- 5: (liegende) Achse
- 6a - i: Werkzeugträger
- 7a - i: Höhenführungseinrichtung
- 8: Pflanzenreihe
- 9a: Bodenbearbeitungswerkzeuge
- 9b: Striegel
- 10: Parallelogrammaufhängung
- 11: Aktor
- 12: Führungsrad
- 13: Schwenkeinrichtung
- 14: Stützrad
- 15A, B, B': Ebene
- A: Abstand

## Patentansprüche

1. Bodenbearbeitungsgerät (1) für Reihenkulturen, umfassend
- einen sich in Arbeitsstellung quer zur Fahrrichtung (F) erstreckenden Rahmen (2), der ein Basissegment (2A) und zumindest ein zu dem Basissegment (2A) klappbaren Ausleger (2B) aufweist,
- eine Klappvorrichtung (3) zur Verbringung des mindestens einen klappbaren Auslegers (2B) zwischen der Arbeitsstellung und einer zumindest annährend um 90 Grad geklappten Transportstellung, und
- einer Mehrzahl über jeweils eine fernverstellbare Höhenführungseinrichtung (7a - 7i) an dem Rahmen angeordneter Werkzeugträger (6a - 6i), wobei an den Werkzeugträgern (6a - 6i) einzelnen Pflanzenreihen (8) zugeordnete Bodenbearbeitungswerkzeuge (9a) angeordnet sind, **dadurch gekennzeichnet, dass** die Klappvorrichtung (3) und zumindest die Höhenführungseinrichtungen (7d - 7f) an dem Basissegment (2A) angeordneter Werkzeugträger (6d - 6f) durch eine, vorzugsweise hydraulische, Kopplungssteuereinrichtung miteinander gekoppelt sind derart, dass bei jedem Verbringen eines Auslegers (2B) aus der Arbeitsstellung in die Transportstellung die Höhenführungseinrichtungen (7d - 7f) an dem Basissegment (2A) angeordneter Werkzeugträger (6d - 6f) die Werkzeugträger (6d - 6f) in eine gegenüber dem Rahmen (2) abgesenkte Position verbringen.

2. Bodenbearbeitungsgerät (1) nach Anspruch 1, **dadurch gekennzeichnet, dass** die Höhenführungseinrichtungen (7a - 7c, 7g - 7i) an einem Ausleger (2B) angeordneter Werkzeugträger (6a - 6c, 6g - 6i) mit der Kopplungssteuereinrichtung gekoppelt sind derart, dass bei jedem Verbringen eines Auslegers (2B) aus der Arbeitsstellung in die Transportstellung die Höhenführungseinrichtungen (7a - 7c, 7g - 7i) an einem Ausleger (2B) angeordneter Werkzeugträger (6a - 6c, 6g - 6i) die Werkzeugträger (6a - 6c, 6g - 6i) in eine angehobene Position verbringen.

3. Bodenbearbeitungsgerät (1) nach zumindest einem der vorstehenden Ansprüche, **dadurch gekennzeichnet, dass** das Bodenbearbeitungsgerät (1) zumindest ein Stützrad (14), das über eine fernverstellbare Schwenkeinrichtung (13), vorzugsweise auf der den Werkzeugträgern (6a - 6i) abgewandten Seite, an dem Rahmen (2), insbesondere einem Ausleger (2B), angeordnet ist, umfasst.

4. Bodenbearbeitungsgerät (1) nach Anspruch 3, **dadurch gekennzeichnet, dass** die zumindest eine Schwenkeinrichtung (13) mit der Kopplungssteuereinrichtung gekoppelt ist derart, dass bei jedem Verbringen eines Auslegers (2B) aus der Arbeitsstellung in die Transportstellung die Schwenkeinrichtung (13) das zumindest eine Stützrad (14) in eine Aushubposition verschwenkt.

5. Bodenbearbeitungsgerät (1) nach zumindest einem der vorstehenden Ansprüche, **dadurch gekennzeichnet, dass** die Höhenführungseinrichtungen (7a - 7i) jeweils dazu eingerichtet sind, den Werkzeugträger (6a - 6i) in zumindest 30 Zentimeter, vorzugsweise zumindest 40 Zentimeter, beabstandete Positionen zu verbringen.

6. Bodenbearbeitungsgerät (1) nach einem der vorstehenden Ansprüche, **dadurch gekennzeichnet, dass** die Höhenführungseinrichtungen (7a - 7i) eine lösbare Befestigungsvorrichtung, die vorzugsweise als Klemmvorrichtung ausgebildet ist, zur Anordnung der Werkzeugträger (6a - 6i) am Rahmen (2) aufweist, so dass die Werkzeugträger (6a - 6i) in verstellbaren Abständen quer zur Fahrtrichtung (F) am Rahmen (2) anordbar sind.

7. Bodenbearbeitungsgerät (1) nach Anspruch 2, **dadurch gekennzeichnet, dass** zumindest die die Höhenführungseinrichtungen (7a - 7c, 7g - 7i) an einem Ausleger (2B) angeordneter Werkzeugträger (6a - 6c, 6g - 6i), vorzugsweise in geklappter Transportstellung des Bodenbearbeitungsgerätes (1), verriegelbar sind.

8. Bodenbearbeitungsgerät (1) nach einem der der Ansprüche 1, 2 oder 4, **dadurch gekennzeichnet, dass** die Kopplungssteuereinrichtung als hydraulische Masterschaltung ausgebildet ist, so dass bei jedem Verbringen eines Auslegers (2B) aus der Arbeitsstellung in die Transportstellung die Höhenführungseinrichtungen (7d - 7f) an dem Basissegment (2A) angeordneter Werkzeugträger (6d - 6f) ausschließlich in Richtung der abgesenkten Position, die Höhenführungseinrichtungen (7a - 7c, 7g - 7i) an einem Ausleger (2B) angeordneter Werkzeugträger (6a - 6c, 6g - 6i) ausschließlich in Richtung der angehobenen Position und/oder die Schwenkeinrichtung (13) ausschließlich in Richtung der Aushubposition ansteuerbar ist.

9. Bodenbearbeitungsgerät (1) nach zumindest einem der vorstehenden Ansprüche, **dadurch gekennzeichnet, dass** der Rahmen (2) das Basissegment (2A) und zwei Ausleger (2B) aufweist, dass die Ausleger (2B) um jeweils eine liegende Achse (5) klappbar, in Fahrtrichtung (F) vor dem Basissegment (2A) angeordnet sind.

10. Bodenbearbeitungsgerät (1) nach Anspruch 9, **dadurch gekennzeichnet, dass** das Basissegment (2A) und die Ausleger (2B) angrenzend an die liegenden Achsen (5), insbesondere quer zur Fahrtrichtung (F), überlagernd angeordnet sind.

## Claims

1. Soil cultivation apparatus (1) for row crops, comprising
- a frame (2) which extends transversely to the direction of travel (F) in the working position and has a base segment (2A) and at least one boom (2B) which can be folded to the base segment (2A),
- a folding device (3) for moving the at least one foldable boom (2B) between the working position and a transport position which is folded at least approximately by 90 degrees, and
- a plurality of tool carriers (6a - 6i) which are each arranged on the frame via a remotely adjustable height guide means (7a - 7i), soil cultivation tools (9a) associated with individual rows (8) of plants being arranged on the tool carriers (6a - 6i), **characterized in that** the folding device (3) and at least the height guide means (7d - 7f) of tool carriers (6d - 6f) arranged on the base segment (2A) are coupled to one another by a preferably hydraulic coupling control means such that each time a boom (2B) is moved from the working position into the transport position, the height guide means (7d - 7f) of tool carriers (6d - 6f) arranged on the base segment (2A) move the tool carriers (6d - 6f) into a lowered position relative to the frame (2).

2. Soil cultivation apparatus (1) according to claim 1, **characterized in that** the height guide means (7a - 7c, 7g - 7i) of tool carriers (6a - 6c, 6g - 6i) arranged on a boom (2B) are coupled to the coupling control means such that each time a boom (2B) is moved from the working position into the transport position, the height guide means (7a - 7c, 7g - 7i) of tool carriers (6a - 6c, 6g - 6i) arranged on a boom (2B) move the tool carriers (6a - 6c, 6g - 6i) into a raised position.

3. Soil cultivation apparatus (1) according to at least one of the preceding claims, **characterized in that** the soil cultivation apparatus (1) comprises at least one support wheel (14) which is arranged on the frame (2), in particular a boom (2B), via a remotely adjustable pivoting means (13), preferably on the side facing away from the tool carriers (6a - 6i).

4. Soil cultivation apparatus (1) according to claim 3, **characterized in that** the at least one pivoting means (13) is coupled to the coupling control means such that each time a boom (2B) is moved from the working position into the transport position, the pivoting means (13) pivots the at least one support wheel (14) into an excavation position.

5. Soil cultivation apparatus (1) according to at least one of the preceding claims, **characterized in that** the height guide means (7a - 7i) are each designed to move the tool carrier (6a - 6i) into positions which are spaced apart by at least 30 centimeters, preferably at least 40 centimeters.

6. Soil cultivation apparatus (1) according to any one of the preceding claims, **characterized in that** the height guide means (7a - 7i) have a detachable fastening device, which is preferably designed as a clamping device, for arranging the tool carriers (6a - 6i) on the frame (2) so that the tool carriers (6a - 6i) can be arranged at adjustable intervals transversely to the direction of travel (F) on the frame (2).

7. Soil cultivation apparatus (1) according to claim 2, **characterized in that** at least the height guide means (7a - 7c, 7g - 7i) of tool carriers (6a - 6c, 6g - 6i) arranged on a boom (2B) can be locked, preferably in the folded transport position of the soil cultivation apparatus (1).

8. Soil cultivation apparatus (1) according to any one of claims 1, 2 or 4, **characterized in that** the coupling control means is designed as a hydraulic master circuit so that each time a boom (2B) is moved from the working position into the transport position, the height guide means (7d - 7f) of tool carriers (6d - 6f) arranged on the base segment (2A) can be controlled exclusively in the direction of the lowered position, the height guide means (7a - 7c, 7g - 7i) of tool carriers (6a - 6c, 6g - 6i) arranged on a boom (2B) can be controlled exclusively in the direction of the raised position and/or the pivoting means (13) can be controlled exclusively in the direction of the excavation position.

9. Soil cultivation apparatus (1) according to at least one of the preceding claims, **characterized in that** the frame (2) has the base segment (2A) and two booms (2B), **in that** the booms (2B) are arranged in front of the base segment (2A) in the direction of travel (F) so as to each be foldable about a horizontal axis (5).

10. Soil cultivation apparatus (1) according to claim 9, **characterized in that the** base segment (2A) and the booms (2B) are arranged overlying one another adjacent to the horizontal axis (5), in particular transversely to the direction of travel (F).

## Revendications

1. Engin de travail du sol (1) pour cultures en ligne, comprenant
- un cadre (2) s'étendant transversalement à la direction de déplacement (F) en position de travail, qui présente un segment de base (2A) et au moins un bras (2B) pliable par rapport au segment de base (2A),
- un dispositif de pliage (3) destiné faire passer l'au moins un bras (2B) pliable entre la position de travail et une position de transport pliée d'au moins approximativement 90 degrés et
- une pluralité de porte-outils (6a - 6i) agencés sur le cadre par l'intermédiaire respectivement d'un dispositif de guidage en hauteur (7a - 7i) réglable à distance, des outils de travail du sol (9a) associés à des rangées de plantes (8) individuelles étant agencés sur les porte-outils (6a - 6i),
**caractérisé en ce que** le dispositif de pliage (3) et au moins les dispositifs de guidage en hauteur (7d - 7f) de porte-outils (6d - 6f) agencés sur le segment de base (2A) sont accouplés entre eux par un dispositif de commande d'accouplement, de préférence hydraulique, de telle sorte qu'à chaque passage d'un bras (2B) depuis la position de travail dans la position de transport, les dispositifs de guidage en hauteur (7d - 7f) de porte-outils (6d - 6f) agencés sur le segment de base (2A) font passer les porte-outils (6d - 6f) dans une position abaissée par rapport au cadre (2).

2. Engin de travail du sol (1) selon la revendication 1, **caractérisé en ce que** les dispositifs de guidage en hauteur (7a - 7c, 7g - 7i) de porte-outils (6a - 6c, 6g - 6i) agencés sur un bras (2B) sont accouplés au dispositif de commande d'accouplement de telle sorte qu'à chaque passage d'un bras (2B) depuis la position de travail dans la position de transport, les dispositifs de guidage en hauteur (7a - 7c, 7g - 7i) de porte-outils (6a - 6c, 6g - 6i) agencés sur un bras (2B) font passer les porte-outils (6a - 6c, 6g - 6i) dans une position relevée.

3. Engin de travail du sol (1) selon au moins l'une des revendications précédentes, **caractérisé en ce que** l'engin de travail du sol (1) comprend au moins une roue d'appui (14) qui est agencée sur le cadre (2), en particulier sur un bras (2B), par l'intermédiaire d'un dispositif de pivotement (13) réglable à distance, de préférence sur le côté opposé aux porte-outils (6a - 6i).

4. Engin de travail du sol (1) selon la revendication 3, **caractérisé en ce que** l'au moins un dispositif de pivotement (13) est accouplé au dispositif de commande d'accouplement de telle sorte qu'à chaque passage d'un bras (2B) depuis la position de travail dans la position de transport, le dispositif de pivotement (13) fait pivoter l'au moins une roue d'appui (14) dans une position de déblaiement.

5. Engin de travail du sol (1) selon au moins l'une des revendications précédentes, **caractérisé en ce que** les dispositifs de guidage en hauteur (7a - 7i) sont respectivement conçus pour fait passer les porte-outils (6a - 6i) dans des positions espacées d'au moins 30 centimètres, de préférence d'au moins 40 centimètres.

6. Engin de travail du sol (1) selon l'une des revendications précédentes, **caractérisé en ce que** les dispositifs de guidage en hauteur (7a - 7i) présentent un dispositif de fixation amovible, qui est de préférence réalisé sous la forme d'un dispositif de serrage, pour l'agencement des porte-outils (6a - 6i) sur le cadre (2), de telle sorte que les porte-outils (6a - 6i) peuvent être agencés sur le cadre (2) à des distances réglables, transversalement à la direction de déplacement (F).

7. Engin de travail du sol (1) selon la revendication 2, **caractérisé en ce qu'**au moins les dispositifs de guidage en hauteur (7a - 7c, 7g - 7i) de porte-outils (6a - 6c, 6g - 6i) agencés sur un bras (2B) peuvent être verrouillés, de préférence lorsque l'engin de travail du sol (1) est en position de transport pliée.

8. Engin de travail du sol (1) selon l'une des revendications 1, 2 ou 4, **caractérisé en ce que** le dispositif de commande d'accouplement est réalisé sous la forme d'un circuit hydraulique maître, de telle sorte qu'à chaque passage d'un bras (2B) depuis la position de travail dans la position de transport, les dispositifs de guidage en hauteur (7d - 7f) de porte-outils (6d - 6f) agencés sur le segment de base (2A) peuvent être commandés exclusivement vers la position abaissée, les dispositifs de guidage en hauteur (7a - 7c, 7g - 7i) de porte-outils (6a - 6c, 6g - 6i) agencés sur un bras (2B) peuvent être commandés exclusivement vers la position relevée et/ou le dispositif de pivotement (13) peut être commandé exclusivement vers la position de déblaiement.

9. Engin de travail du sol (1) selon au moins l'une des revendications précédentes, **caractérisé en ce que** le cadre (2) présente le segment de base (2A) et deux bras (2B), **en ce que** les bras (2B) sont agencés de manière à pouvoir être pliés respectivement autour d'un axe couché (5), dans la direction de déplacement (F) devant le segment de base (2A).

10. Engin de travail du sol (1) selon la revendication 9, **caractérisé en ce que** le segment de base (2A) et les bras (2B) sont agencés de manière superposée, de manière adjacente aux axes couchés (5), en particulier transversalement à la direction de déplacement (F).
